# EUROPEAN PATENT SPECIFICATION

(11) **EP 2 007 118 B1**
(45) Date of publication and mention of the grant of the patent: **08.06.2011**
(21) Application number: 06731441.9
(22) Date of filing: 07.04.2006
(51) Int. Cl.: H04M 1/2745, G06F 13/00

(54) **COMMUNICATION TERMINAL, MANAGEMENT SERVER, CHANGE RECOGNITION SYSTEM, AND CHANGE RECOGNITION METHOD**
KOMMUNIKATIONSENDGERÄT, VERWALTUNGSSERVER, ÄNDERUNGSERKENNUNGSSYSTEM UND ÄNDERUNGSERKENNUNGSVERFAHREN
TERMINAL DE COMMUNICATION, SERVEUR DE GESTION, SYSTÈME D'IDENTIFICATION DE CHANGEMENTS ET PROCÉDÉ D'IDENTIFICATION DE CHANGEMENTS

(43) Date of publication of application: 24.12.2008
(73) Proprietor: Panasonic Corporation, Kadoma-shi Osaka 571-8501 (JP)
(72) Inventor: SAIIN, Toshinori, 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/307494
(87) International publication number: WO 2007/116513

(56) References cited:
- JP-A- 2001 103 132
- JP-A- 2002 111 876
- JP-A- 2003 188 979
- JP-A- 2004 023 414
- US-A1- 2005 047 577
- US-A1- 2006 046 720

## Description

This invention relates to a communication terminal device for conducting communications with a line user via a communication line to which a management server is connected, a management server, a change acknowledgement system having a communication terminal device and a management server, and a change acknowledgement method.

A communication terminal device represented by a conventional mobile telephone, etc., holds a telephone directory function of enabling the user to register telephone numbers and mail addresses of associated users as associated parties of telephone calling and mail transmission or companies, stores, other facilities, etc., personally known by the holder of the communication terminal device (terminal holder) and having a possibility of communicating as user data. The user data is registered in the telephone directory as the terminal holder receives information from the associated user to be registered and manually enters the information or communicates directly with the associated user terminal to be registered. Thus, when the description is changed for the convenience of the registered user (terminal registered user), again it is necessary to receive a notification from the terminal registered user and register the information from the beginning. When the terminal holder does not receive a notification of the change from the terminal registered user, the user data of the terminal registered user is old and imprecise information and thus the terminal holder calls at the incorrect telephone number or transmits mail to the incorrect mail address.

When the incorrect telephone number is not assigned to any users, the terminal holder acknowledges the change according to a message to the effect that the telephone number is not used; however, when the incorrect telephone number is already assigned to a different user, the user is called and is inconvenienced. When the incorrect mail address is not assigned to any users, the terminal holder acknowledges the change by error mail to the effect that transmission results in failure; however, when the incorrect mail address is already assigned to a different user, mail is transmitted to the user and thus the terminal holder communicates with the different party from the intended party. Further, when the different user is the same gender and generation as the intended party for communications, it is difficult to determine the person by his or her voice and there is also a possibility that the terminal holder has a telephone conversation with the different user without knowing that the associated party is the incorrect person.

On the other hand, for the terminal holder to acknowledge user data change presence/absence of the terminal registered user, the terminal registered user needs to be contacted for the user data change presence/absence. However, when a contact address where to make contact with the terminal registered user is stored only in the terminal, the party whose user data is changed cannot be contacted and the purpose cannot be achieved.

Then, a method is known wherein the user registers identity information of the address, the telephone number, the mail address, etc., is registered in a server and later when the user changes the identity information, the user sends a notification to any desired party using the server on a network. (For example, refer to patent document 1.) A mobile telephone for sending a notification of change to any desired party when the user changes the telephone number is known. (For example, refer to patent document 2.)

Patent document 1: JP-A-2002-108882
Patent document 2: JP-A-2002-247182
Reference US 2006046720 (A1) describes a method of obtaining communication party identity information in a mobile terminal. According to the method, an attempt from a remote communication party to establish communication over a mobile telecommunications network is detected. First identity information about the remote communication party is determined from the detected attempt. A memory in the mobile terminal is searched for certain additional identity information associated with the first identity information. In the absence of such additional identity information, an additional identity information request is transmitted from the mobile terminal to a remote server using the mobile telecommunications network, said request including said first identity information as a search key. An additional identity information reply is received over the mobile telecommunications network. Additional identity information contained in the additional identity information reply is processed to render it available to a user of the mobile terminal.
From US 2005047577 (A1) an information assistance service is known that automatically updates contact information in a subscriber's contacts folder or private directory. The information assistance service receives changes to its public telephone number database, which includes name, telephone number, postal address, and possibly e-mail address, compares the information in the contacts folder to be updated with the changes to the public database, and replaces the information in the contacts folder with new information if the telephone number is included within the changes to the public database. The subscriber may choose to be notified before or after such replacement is made -- if before, the user may approve the changes one-by-one or all together. The updating can be performed in substantially real-time, as soon as changes to the public database are received, or the updating can be performed less frequently than those changes are received. In the latter case, the changes made to the public database since the last update are kept track of. Alternatively, shadow record information about a contact may be derived when a contact is added to a contacts folder, and an intelligent search may be performed using the shadow record information to update the contact record.

However, in the related arts described above, the user changing the telephone number, etc., searches for the parties where a notification is to be sent and all registered terminal holders do not receive a change notification of the user data and the terminal holder not receiving the notification does not know the user data change and calls at the incorrect telephone number or sends mail to the incorrect mail address.

It is therefore an object of the invention to provide a communication terminal device, a management server, a change acknowledgement system, and a change acknowledgement method for enabling the terminal holder to at least acknowledge that there is a possibility that user data may be changed without receiving a change notification from a user when the user data is changed.
[0009] This is achieved by the features of the independent claims. Preferred embodiments are subject matter of the dependent claims.

According to the invention, when the user data is changed, it can be acknowledged at least that there is a possibility that the user data may be changed without receiving a change notification from the user. To call, the terminal holder can acknowledge the change presence/absence of the telephone number and when the telephone number is changed, the terminal holder can be warned for checking whether or not to call at the telephone number and consequently, the situation in which an erroneous party is called can be eliminated. To transmit mail, the terminal holder can acknowledge the change presence/absence of the mail address and when the mail address is changed, warning mail can be returned to the terminal holder and consequently, mail transmission to an erroneous party can be prevented.

The most recent use date and time of the registered user data is managed, whereby the reliability of the user data can be estimated based on the fact that the possibility that the user data may be changed is high when the most recent use date and time is too old. Further, if two or more pieces of user data are registered for one user, which data piece is correct can also be estimated based on the most recent use date and time.

FIG. 1 is a block diagram of a data change presence/absence acknowledgement system in an embodiment of the invention.
FIG. 2 is a schematic configuration drawing of a management method of the most recent date and time in the embodiment of the invention.
FIG. 3 is an operation flowchart for automatically detecting user data with a high change possibility and informing the user of the user data with a high change possibility in the embodiment of the invention.
FIG. 4 is an operation flowchart for checking the change presence/absence of user data using a mail function or a Web browsing function in the embodiment of the invention.
FIG. 5 is an operation flowchart for checking the change presence/absence of the telephone number at the telephone calling time in the embodiment of the invention.
FIG. 6 is an operation flowchart for checking the change presence/absence of the mail address at the mail transmission time in the embodiment of the invention.
Next, an embodiment of the invention will be discussed with reference to FIGS. 1 to 6. The same reference numeral denotes the same object throughout the accompanying drawings.

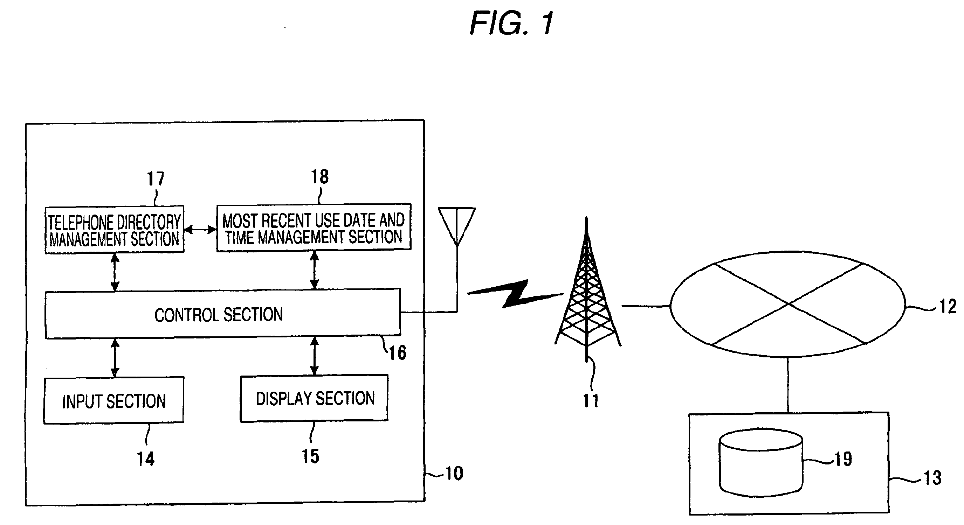

FIG. 1 is a block diagram of a data change presence/absence acknowledgement system 100 in the embodiment of the invention. The data change presence/absence acknowledgement system 100 has a communication terminal device 10, a base station 11, a communication network 12, and a server 13. The communication terminal device 10 has an input section 14, a display section 15, a control section 16, a telephone directory management section 17, and a most recent use date and time management section 18. The server 13 has a database 19.

The data change presence/absence acknowledgement system 100 is an example of a change acknowledgement system. The communication terminal device 10 is an example of a communication terminal device. The telephone directory management section 17 is an example of a personal information management section. The most recent use date and time management section 18 is an example of a most recent use date and time management section. A part of the control section 16 is an example of a change acknowledgement section, a transmission section, a call connection section, and a line user mail transmission section. The server 13 is an example of a management server. The database 19 is an example of an update management section. The communication network 12 is an example of a communication line.

The input section 14 is an input unit for executing registration/edit/deletion of user data, telephone calling/mail transmission to each terminal registered user, etc., and is input buttons, etc., for example. The display section 15 is a unit for displaying user data information concerning the user data, the result of the change presence/absence of the user data, etc., and is a liquid crystal display, etc., for example.

The control section 16 is a unit for performing control of updating the most recent date and time of the user data when the user data is used, sending the user data and the most recent date and time information thereof to a dedicated server when the change presence/absence of the user data is checked, etc., and is implemented as a CPU, etc., for example.

The telephone directory management section 17 manages the user data of the telephone numbers, the mail addresses of the communication parties, etc. The most recent use date and time management section 18 retains the most recent use date and time when registration/edit/deletion/telephone calling/incoming call/mail transmission/mail reception, etc., is executed most recently for each piece of the user data registered in the telephone directory management section 17. The most recent use date and time is used for comparison with the user registration/correction date and time managed in the database 19 described later when the user change presence/absence of registered data is checked.

The communication terminal device 10 is connected to the communication network 12 through the base station 11. The server 13 for managing the user information using the line is connected to the communication network 12. The server 13 has the database 19 for retaining the user registration/correction date and time when the user newly registers or changes the registration as the line user in addition to the user information.

In addition to controlling the communication function and other relevant functions of the communication terminal device 10, the control section 16 performs processing for requests for registration/edit/deletion of the user data from the input section 14, telephone calling/mail transmission, etc., to each terminal registered user and performs processing for incoming call/mail reception from each terminal registered user and then updates the most recent use date and time of the used user data. Further, to check the change presence/absence of the user data, the control section 16 transmits the user data and the most recent date and time information thereof to the server 13 by using a mail function or a Web browsing function or adding them to an information element at the telephone calling time or a mail header at the mail transmission time, and displays the obtained result on the display section 15.

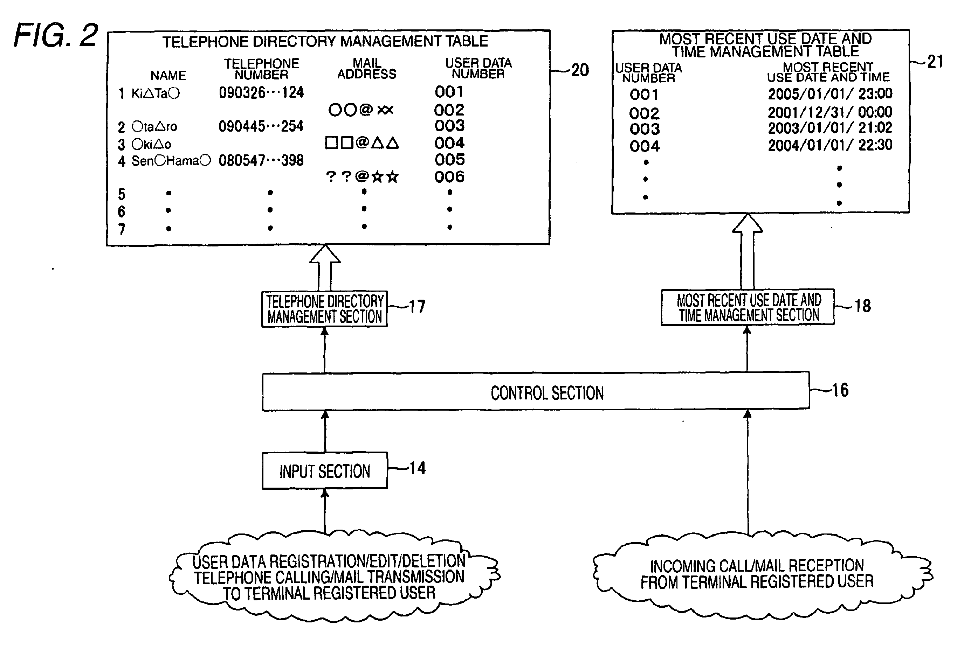

Next, a method of managing the most recent date and time for each piece of the user data registered in the telephone directory management section 17 will be discussed with FIG. 2. FIG. 2 is a schematic configuration drawing concerning management of the most recent date and time in the embodiment of the invention.

To manage the most recent date and time for each piece of the user data, the telephone directory management section 17 has a telephone directory management table 20 and the most recent use date and time management section 18 has a most recent use date and time management table 21. The telephone directory management table 20 is used to manage terminal registered user information in the telephone directory management section 17. The names of the terminal registered users, the user data of the telephone number, the mail address, etc., and the user data number corresponding to the user, etc., are registered in the telephone directory management table 20. In the most recent use date and time management table 21, the most recent date and time is managed for each piece of the user data in the most recent use date and time management section 18. The most recent use date and time of the corresponding user data with the user data number as a key, etc., is registered in the most recent use date and time management table 21.

First, the operation at the user data registration time will be discussed. When a registration event of user data is entered in the control section 16 from the input section 14, the control section 16 sends a user data registration request to the telephone directory management section 17 and the telephone directory management section 17 receiving the user data registration request adds the user data to the telephone directory management table 20. After the user data is added, the control section 16 requests the most recent use date and time management section 18 to register the user data number and the most recent use date and time (data registration date and time) of the user data, and the most recent use date and time management section 18 receiving the registration request adds the user data number and the most recent use date and time of the user data to the most recent use date and time management table 21.

Next, the operation at the user data deletion time will be discussed. When a deletion event of user data is entered in the control section 16 from the input section 14, the control section 16 sends a user data deletion request to the telephone directory management section 17 and the telephone directory management section 17 receiving the user data deletion request deletes the user data from the telephone directory management table 20. After the user data is deleted, the control section 16 requests the most recent use date and time management section 18 to delete the user data number and the most recent use date and time of the user data, and the most recent use date and time management section 18 receiving the deletion request deletes the user data number and the most recent use date and time of the user data from the most recent use date and time management table 21.

Next, the operation at the user data edit time, etc., will be discussed. When an edit event of user data or a telephone calling or mail transmission event to a terminal registered user or an incoming call or mail reception event from a terminal registered user through the communication network 12 is entered in the control section 16 from the input section 14, the control section 16 references the user data from the telephone directory management section 17 and performs processing for the received event (user data edit processing, telephone calling/incoming call processing, mail transmission/reception processing, etc.,). After performing the processing for the received event, the control section 16 requests the most recent use date and time management section 18 to update the most recent use date and time of the user data number of the user data, and the most recent use date and time management section 18 receiving the update request updates the most recent use date and time of the user data number of the user data registered in the most recent use date and time management table 21 to the date and time of the processing.
As the procedure is executed, the most recent use date and time of the user data registered in the telephone directory management section 17 can be managed.

The management processing of the most recent use date and time for each piece of the user data is thus performed, whereby a comparison can be made between the most recent use date and time of the target user data managed by the most recent use date and time management section 18 and the user registration/correction date and time of the target user data managed in the database 19, and whether or not the target user data is changed can be determined based on the comparison result. When the most recent use date and time is newer than the user registration/correction date and time, the user data is not changed; when the most recent use date and time is older than the user registration/correction date and time, the user data is changed. Thus, it is made possible for the terminal holder to acknowledge the change presence/absence of the target user data at any desired timing without receiving a user data change notification from a registered user.

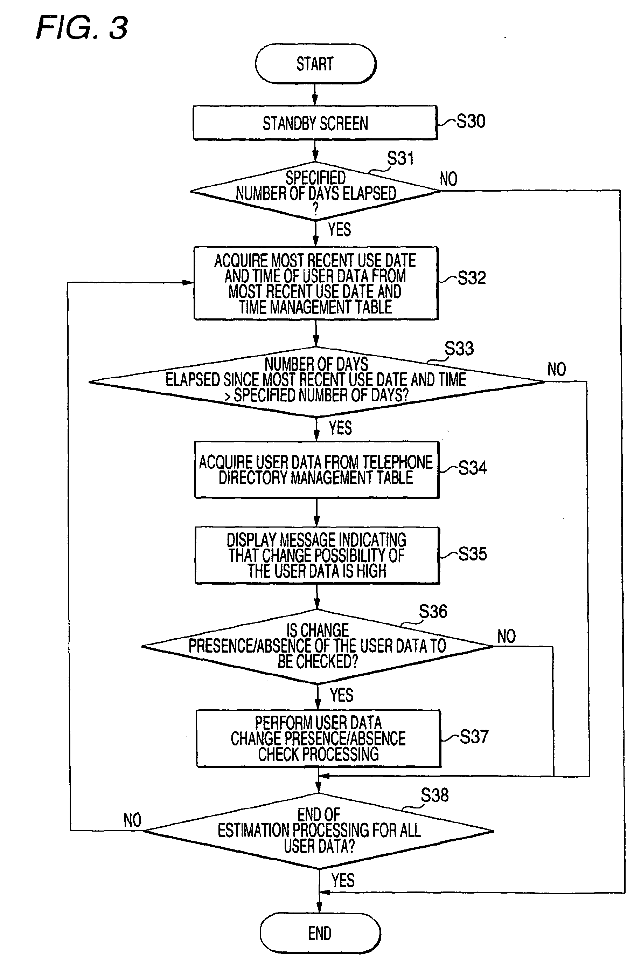

Next, a method of automatically detecting user data with a high change possibility from the user data registered in the communication terminal device 10 and informing the user of the user data with a high change possibility will be discussed. FIG. 3 is an operation flowchart for the communication terminal device 10 in the embodiment of the invention to automatically detect user data with a high change possibility and informing the user of the user data with a high change possibility.

In the embodiment, to automatically detect user data with a high change possibility from the user data registered in the communication terminal device 10 and inform the user of the user data with a high change possibility, first the terminal holder presets the interval of executing automatic detection (which will be hereinafter referred to as "automatic detection execution interval") and a threshold value (duration of unused time period) for estimating as user data with a high change possibility (which will be hereinafter referred to as "change estimation threshold value").

The processing of automatically detecting user data with a high change possibility from the user data and informing the user of the user data with a high change possibility is applied to all user data registered in the telephone directory management table 20. First, when the communication terminal device 10 is in a standby mode and the date of the communication terminal device 10 changes, the processing is started (step S30). When a predetermined time period has elapsed since the preceding automatic detection execution date and the automatic detection execution period has elapsed (step S31), the control section 16 acquires the most recent use date and time of user data from the most recent use date and time management table 21 (step S32). When the automatic detection execution period has not elapsed, the whole processing is terminated.

The control section 16 calculates the unused time period of the user data from the acquired most recent use date and time and the current date and makes a comparison between the unused time period and the change estimation threshold value (step S33). When the unused time period is smaller than the change estimation threshold value, it is estimated that the change possibility of the user data is low, and the control section 16 terminates the processing for the user data and makes a transition to estimation processing for the next user data. When the unused time period is larger than the change estimation threshold value, it is estimated that the change possibility of the user data is high, and the control section 16 acquires the user data from the telephone directory management table 20 using the user data number of the user data as a key (step S34), and displays a message to the effect that the change possibility of the user data is high on the display section 15 for informing the terminal holder of the fact (step S35).

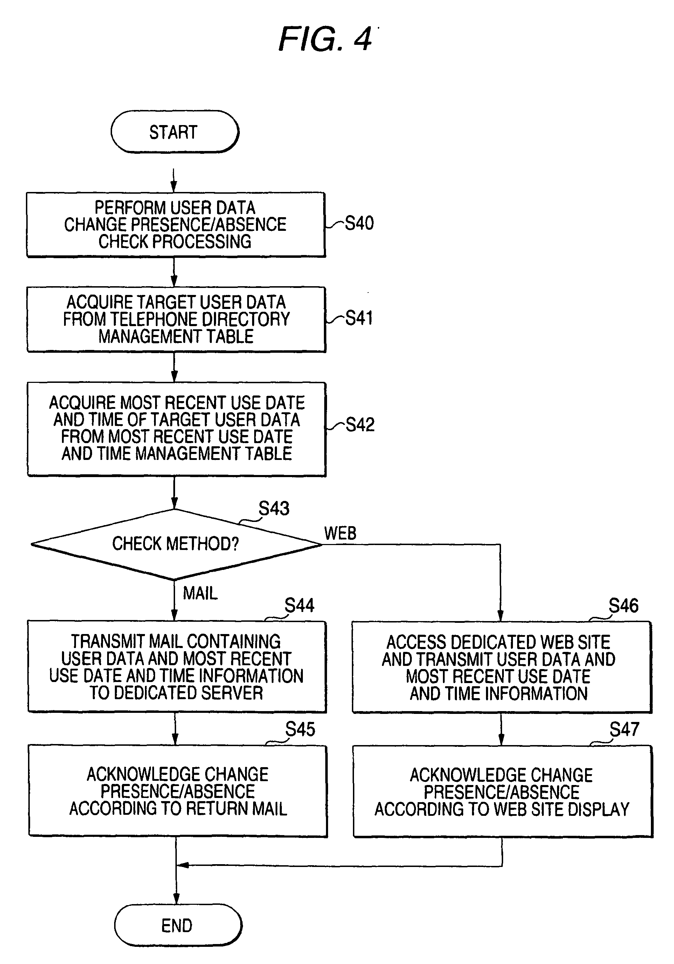

When the change presence/absence of the user data is to be checked (step S36), user data change presence/absence check processing described later (see FIG. 4) is executed for checking the change presence/absence of the user data (step S37); if the change presence/absence of the user data is not to be checked, the process goes to step S38. Which user data the change presence/absence check processing is to be performed for is defined separately.
When steps S32 to S37 have not been executed for all user data described in the telephone directory management table 20, the process goes to step S32; when steps S32 to S37 have been executed for all user data, the whole processing is terminated.

The processing of automatically detecting user data with a high change possibility and informing the user of the user data with a high change possibility is thus performed, whereby when the acquired most recent use date and time of the registered user data has elapsed a predetermined time period or more from the current time, the terminal holder can be informed that the change possibility of the user data is high. Consequently, the terminal holder can know the user data scarcely used and having a high change possibility and can know the execution timing of the user data change presence/absence check processing in the embodiment.

Next, a method for the terminal holder to check the change presence/absence of the target user data at any desired timing will be discussed. In the embodiment, it is assumed that the mail function or the Web browsing function is used as a check method. FIG. 4 is an operation flowchart for the communication terminal device 10 in the embodiment of the invention to check the change presence/absence of user data using the mail function or the Web browsing function.

If the input section 14 makes a user data change presence/absence check request by the terminal holder or if a change check request is made for the user data estimated to be user data with a high change possibility, the processing is started (step S40).

First, the control section 16 acquires the target user data from the telephone directory management table 20 (step S41) and acquires the most recent use date and time of the target user data from the most recent use date and time management table 21 (step S42). Subsequently, the control section 16 inquires of the terminal holder what the check method is (use of the mail function or the Web function) through the display section 15 (step S43).

To use the mail function as the check method, the control section 16 transmits inquiry mail about the user data change presence/absence containing information concerning the user data and the most recent use date and time acquired at steps S41 and S42 to the dedicated server 13 through an antenna, etc., (step S44). The server 13 receiving the inquiry mail makes a comparison between the most recent use date and time given to the mail and the user registration/correction date and time of the user data managed in the database 19. As a result of the comparison, when the most recent use date and time is older than the user registration/correction date and time, the control section 16 determines that the user data is changed because the data last used by the user is changed after the user registration/correction date and time; when the most recent use date and time is after the user registration/correction date and time, the control section 16 determines that the user data is not changed, and sends the result to the terminal holder by return mail (step S45).

To use the Web browsing function as the check method, the control section 16 accesses a Web site for inquiry about the user data change presence/absence and transmits the user data and the most recent use date and time acquired at steps S41 and S42 to the dedicated server 13 through an antenna, etc., (step S46). The server 13 receiving the inquiry about the change presence/absence makes a comparison between the transmitted most recent use date and time and the user registration/correction date and time of the user data managed in the database 19. As a result of the comparison, when the most recent use date and time is older than the user registration/correction date and time, the control section 16 determines that the user data is changed because the data last used by the user is changed after the user registration/correction date and time; when the most recent use date and time is after the user registration/correction date and time, the control section 16 determines that the user data is not changed, and displays the result at the Web site for informing the terminal holder (step S47).

The user data change presence/absence check processing is thus performed, whereby the mail transmission/reception function or the Web browsing function provided as the standard in the general communication terminal device 10 enables the terminal holder to acknowledge the change presence/absence of the target user data at any desired timing. Consequently, the need for providing a special communication unit between the communication terminal device 10 and the server 13 is eliminated.

Next, a method of notifying a terminal registered user that information concerning the user is changed before the terminal holder makes contact with the terminal registered user will be discussed. Here, the case where the terminal holder makes contact with the terminal registered user by telephone and the case where the terminal holder makes contact with the terminal registered user by mail are assumed.

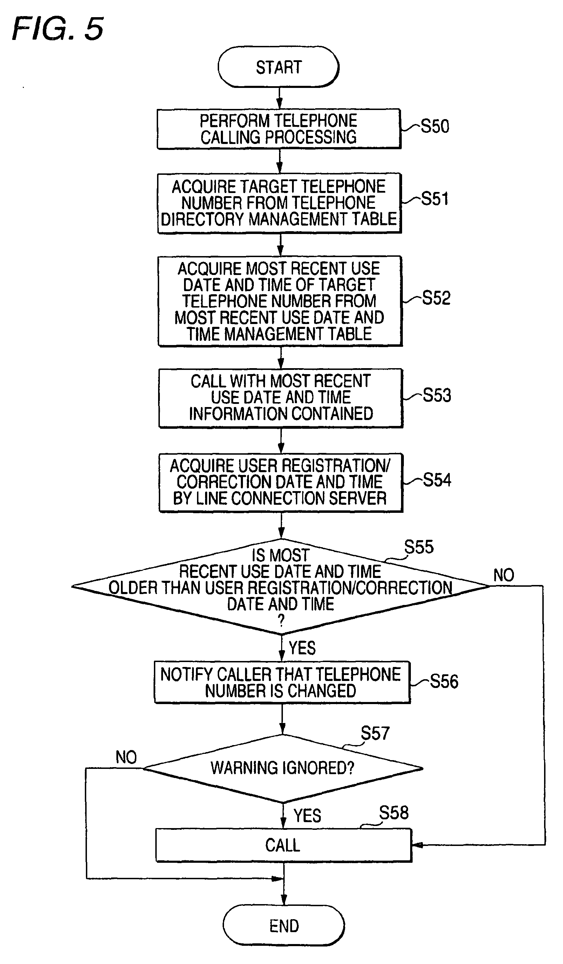

First, FIG. 5 is an operation flowchart for the communication terminal device 10 in the embodiment of the invention to check the change presence/absence of the telephone number at the telephone calling time. It is assumed that the server 13 connects the call receiving the calling request.

When the terminal holder calls the terminal registered user by telephone, the processing is started (step S50). First, the control section 16 acquires the target telephone number from the telephone directory management table 20 (step S51) and acquires the most recent use date and time of the target telephone number from the most recent use date and time management table 21 (step S52).

The control section 16 calls the terminal registered user at the telephone number acquired at step S51 with the most recent use date and time acquired at step S52 contained as an information element (step S53). The server 13 acquires the user registration/correction date and time of the telephone number from the database 19 (step S54) and makes a comparison between the most recent use date and time given to the telephone number and the user registration/correction date and time of the telephone number acquired at step S54 (step S55).

When the most recent use date and time is older than the user registration/correction date and time, the server 13 notifies the communication terminal device 10 that the telephone number is changed using a message of voice guidance, etc., (step S56). The terminal holder receives the notification at step S56 and then the control section 16 notifies the server 13 whether or not the terminal holder has an intention of calling (step S57). The server 13 receiving the notification cancels the calling if the notification does not ignore the warning; continues the calling if the notification ignores the warning (step S57). When the most recent use date and time is newer than the user registration/correction date and time, the control section 16 of the communication terminal device 10 continues the calling because the telephone number is not changed (step S58).

As the telephone number change presence/absence check processing is thus performed at the calling time, when the terminal registered user is called, when the registered telephone number is changed and becomes an erroneous number at present, the server 13 for executing line connection can notify the terminal holder that the telephone number is changed without immediately connecting the calling. Consequently, such a situation in which an incorrect user is called and is inconvenienced can be prevented.

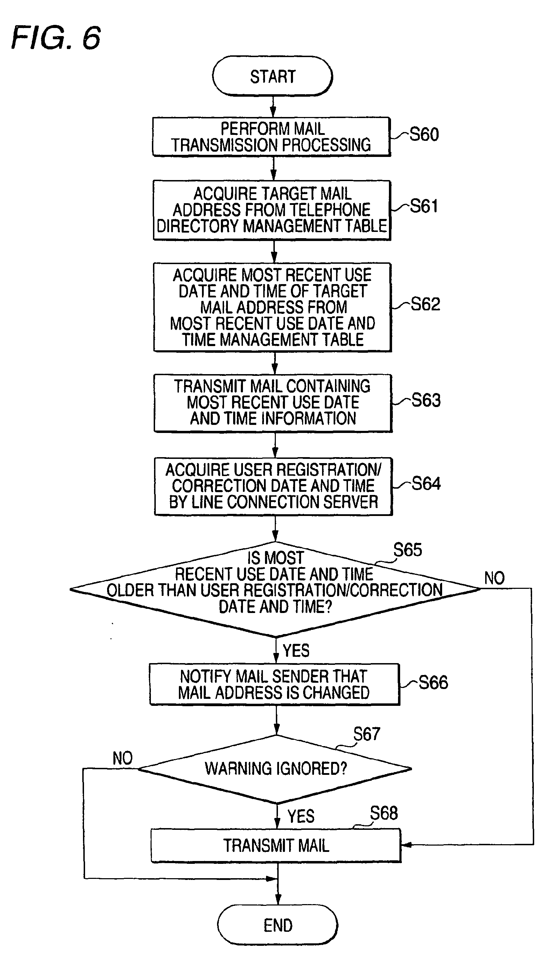

FIG. 6 is an operation flowchart for checking the change presence/absence of the mail address at the mail transmission time in the embodiment of the invention.

When the terminal holder transmits mail to the terminal registered user, the processing is started (step S60). First, the control section 16 acquires the target mail address from the telephone directory management table 20 (step S61) and acquires the most recent use date and time of the target mail address from the most recent use date and time management table 21 (step S62).

Subsequently, the control section 16 transmits mail to the mail address acquired at step S61 with the most recent use date and time acquired at step S62 contained in the mail header information (step S63). The server 13 acquires the user registration/correction date and time of the mail address from the database 19 (step S64) and makes a comparison between the most recent use date and time given to the mail address and the user registration/correction date and time of the mail address acquired at step S64 (step S65).

When the most recent use date and time is older than the user registration/correction date and time, the server 13 notifies the communication terminal device 10 that the mail address is changed by return mail (step S66). The terminal holder receives the notification at step S66 and then the control section 16 notifies the server 13 whether or not the terminal holder has an intention of transmitting mail by return mail (step S67). The server 13 receiving the notification cancels the mail transmission if the notification does not ignore the warning; continues the mail transmission if the notification ignores the warning (step S68).
When the server 13 does not receive the notification by return mail, it is interpreted as canceling the mail transmission and the processing is terminated.
When the most recent use date and time is newer than the user registration/correction date and time, the mail transmission is continued because the mail address is not changed (step S68).

As the mail address change presence/absence check processing is thus performed at the mail transmission time, when mail is transmitted to the terminal registered user, if the registered mail address is changed and becomes an erroneous address at present, the server 13 for executing line connection can notify the terminal holder that the mail address is changed without immediately transmitting mail. Consequently, such a situation in which mail is transmitted to an incorrect user and the user is inconvenienced can be prevented.

The communication terminal device 10 of the data change presence/absence notification system 100 of the embodiment of the invention is the communication terminal device 10 for conducting communications with the line user of the communication network 120 through the communication network 120 and has the telephone directory management section 17 for managing personal information having identification information for identifying the line user and a contact address where to make contact with the line user; the most recent use date and time management section 18 for managing the most recent use date and time indicating the most recent date and time at which the personal information is updated or used; and the control section 16 for acknowledging that there is a possibility that the personal information may be changed if the most recent use date and time is earlier than a predetermined date and time, so that when the user data is changed, it can be acknowledged at least that there is a possibility that the user data may be changed without receiving a change notification from the user.

### Industrial Applicability

The invention is useful in a communication terminal device, a management server, a change acknowledgement system, etc., for enabling the terminal holder to at least acknowledge that there is a possibility that user data may be changed without receiving a change notification from a user when the user data is changed.

## Claims

1. A communication terminal (10) comprising:
a personal information management section (17; 20) for storing a plurality of contact information items, each contact information item indicating a telephone number or a mail address of a communication partner;
a most recent use date and time management section (18; 21) for storing, for each contact information item, a time information item indicating a most recent date and time at which the contact information item is updated or used; and
**characterised by**
a control section (16) adapted for sending a contact information item of the stored plurality of contact information items together with the corresponding time information item to a server (13) and for receiving a response from the server (13), said response indicating whether the telephone number or the mail address indicated by the contact information item has been changed or not.

2. A management server for conducting communication with a communication terminal (10) according to claim 1, the management server comprising:
a database (19) for storing a plurality of user information items and update time information items in association with each other, each of the user information items indicating a telephone number or a mail address of a communication partner, each of the update time information items indicating an update date and time at which the corresponding user information items is updated;
**characterised by**
a receiving section for receiving an inquiry from the communication terminal (10), said inquiry comprising a contact information item and the time information item;
a transmitting section for transmitting a response to the communication terminal (10), said response indicating whether the telephone number or the mail address indicated by the contact information item has been changed or not, depending on whether a use date and time indicated by the received time information item is older than an update date and time indicated by a stored update time information item that corresponds to the received contact information item or not.

3. A communication system comprising a communication terminal according to claim 1 and a management server according to claim 2.

4. A communication method for a communication terminal (10), said method comprising the steps of:
storing a plurality of contact information items, each contact information item indicating a telephone number or a mail address of a communication partner;
storing, for each contact information item, a time information item indicating a most recent date and time at which the contact information item is updated or used; and
**characterised by**
sending a contact information item of the stored plurality of contact information items together with the corresponding time information item to a server (13); and
receiving a response from the server (13), said response indicating whether the telephone number or the mail address indicated by the contact information item has been changed or not.

5. A method for operating a management server for conducting communication with a communication terminal (10) according to claim 1, said method comprising the steps of:
storing a plurality of user information items and update time information items in association with each other, each of the user information items indicating a telephone number or a mail address of a communication partner, each of the update time information items indicating an update date and time at which the corresponding user information items is updated;
**characterised by**
receiving an inquiry from the communication terminal (10), said inquiry comprising a contact information item and a time information item;
transmitting a response to the communication terminal (10), said response indicating whether the telephone number or the mail address indicated by the contact information item has been changed or not, depending on whether a use date and time indicated by the received time information item is older than an update date and time indicated by a stored update time information item that corresponds to the received contact information item or not.

## Patentansprüche

1. Kommunikations-Endgerät (10), das umfasst:
einen Abschnitt (17; 20) zum Verwalten persönlicher Informationen, mit dem eine Vielzahl von Kontaktinformations-Elementen gespeichert werden, wobei jedes Kontaktinformations-Element eine Telefonnummer oder eine Adresse eines Kommunikationspartners angibt;
einen Abschnitt (18; 21) zum Verwalten von Datum und Zeit einer aktuellsten Nutzung, mit der für jedes Kontaktinformations-Element ein Zeitinformations-Element gespeichert wird, das ein aktuellstes Datum und eine aktuellste Zeit anzeigt, zu denen das Kontaktinformations-Element aktualisiert oder verwendet wurde; und
**gekennzeichnet durch**
einen Steuerabschnitt (16), der so eingerichtet ist, dass er ein Kontaktinformations-Element der gespeicherten Vielzahl von Kontaktinformations-Elementen zusammen mit dem entsprechenden Zeitinformations-Element zu einem Server (13) sendet und eine Antwort von dem Server (13) empfängt, wobei die Antwort angibt, ob die **durch** das Kontaktinformations-Element angezeigte Telefonnummer oder Adresse geändert worden ist oder nicht.

2. Verwaltungs-Server zum Durchführen von Kommunikation mit einem Kommunikations-Endgerät (10) nach Anspruch 1, wobei der Verwaltungs-Server umfasst:
eine Datenbank (19) zum Speichern einer Vielzahl von Nutzerinformations-Elementen und Aktualisierungszeitinformations-Elementen in Verbindung miteinander, wobei jedes der Nutzerinformations-Elemente eine Telefonnummer oder eine Adresse eines Kommunikationspartners angibt und jedes der Aktualisierungszeitinformations-Elemente ein Aktualisierungs-Datum sowie eine Aktualisierungs-Zeit angibt, zu der die entsprechenden Nutzerinformations-Elemente aktualisiert wurden;
**gekennzeichnet durch**:
einen Empfangsabschnitt zum Empfangen einer Anfrage von dem Kommunikations-Endgerät (10), wobei die Anfrage ein Kontaktinformations-Element und das Zeitinformations-Element umfasst;
einen Sendeabschnitt zum Senden einer Antwort zu dem Kommunikations-Endgerät (10), wobei die Antwort in Abhängigkeit davon, ob ein Nutzungs-Datum und eine Nutzung-Zeit,
die **durch** das empfangene Zeitinformations-Element angegeben werden, älter sind als ein Aktualisierungs-Datum und eine Aktualisierungs-Zeit, die **durch** ein gespeichertes Aktualisierungszeitinformations-Element angegeben werden, das dem empfangenen Kontaktinformations-Element entspricht, oder nicht, angibt, ob die **durch** das Kontaktinformations-Element angegebene Telefonnummer oder Adresse geändert worden ist oder nicht.

3. Kommunikationssystem, das ein Kommunikations-Endgerät nach Anspruch 1 sowie einen Verwaltungs-Server nach Anspruch 2 umfasst.

4. Kommunikationsverfahren für ein Kommunikations-Endgerät (10), wobei das Verfahren die folgenden Schritte umfasst:
Speichern einer Vielzahl von Kontaktinformations-Elementen, wobei jedes Kontaktinformations-Element eine Telefonnummer oder eine Adresse eines Kommunikationspartners angibt;
Speichern eines Zeitinformations-Elementes, das ein aktuellstes Datum und eine aktuellste Zeit angibt, zu der das Kontaktinformations-Element aktualisiert oder verwendet wurde, für jedes Kontaktinformations-Element; und
**gekennzeichnet durch**
Senden eines Kontaktinformations-Elementes der gespeicherten Vielzahl von Kontaktinformations-Elementen zusammen mit dem entsprechenden Zeitinformations-Element zu einem Server (13); und
Empfangen einer Antwort von dem Server (13), wobei die Antwort angibt, ob die **durch** das Kontaktinformations-Element angegebene Telefonnummer oder Adresse geändert worden ist oder nicht.

5. Verfahren zum Betreiben eines Verwaltungs-Servers zum Durchführen von Kommunikation mit einem Kommunikations-Endgerät (10) nach Anspruch 1, wobei das Verfahren die folgenden Schritte umfasst:
Speichern einer Vielzahl von Nutzerinformations-Elementen und Aktualisierungszeitinformations-Elementen in Verbindung miteinander, wobei jedes der Nutzerinformations-Elemente eine Telefonnummer oder eine Adresse eines Kommunikationspartners angibt und jedes der Aktualisierungszeitinformations-Elemente ein Aktualisierungs-Datum sowie eine Aktualisierungs-Zeit angibt, zu der die entsprechenden Nutzerinformations-Elemente aktualisiert wurden;
**gekennzeichnet durch**:
Empfangen einer Anfrage von dem Kommunikations-Endgerät (10), wobei die Anfrage ein Kontaktinformations-Element und ein Zeitinformations-Element umfasst;
Senden einer Antwort zu dem Kommunikations-Endgerät (10), wobei die Antwort in Abhängigkeit davon, ob ein Nutzungs-Datum und eine Nutzung-Zeit, die **durch** das empfangene Zeitinformations-Element angegeben werden, älter sind als ein Aktualisierungs-Datum und eine Aktualisierungs-Zeit, die **durch** ein gespeichertes Aktualisierungszeitinformations-Element angegeben werden, das dem empfangenen Kontaktinformations-Element entspricht, oder nicht, angibt, ob die **durch** das Kontaktinformations-Element angegebene Telefonnummer oder Adresse geändert worden ist oder nicht.

## Revendications

1. Terminal de communication (10) comprenant :
une section de gestion d'informations personnelles (17 ; 20) permettant de mémoriser une pluralité d'éléments d'informations de contacts, chaque élément d'informations de contact indiquant le numéro de téléphone ou l'adresse de messagerie d'un correspondant ;
une section de gestion de la date et de l'heure la plus récemment utilisée (18 ; 21) permettant de mémoriser, pour chaque élément d'informations de contact, un élément d'informations de temps indiquant la date et l'heure les plus récemment utilisées auxquelles l'élément d'informations de contact est mis à jour ou utilisé, et
**caractérisé par**
une section de commande (16) conçue pour envoyer à un serveur (13) un élément d'informations de contact appartenant à la pluralité mémorisée d'éléments d'informations de contacts en même temps que l'élément d'informations de temps correspondant et pour recevoir une réponse du serveur (13), ladite réponse indiquant si le numéro de téléphone ou l'adresse de messagerie, indiqués par l'élément d'informations de contact, a été modifié ou non.

2. Serveur de gestion permettant de mener une communication avec un terminal de communication (10) conforme à la revendication 1, le serveur de gestion comprenant :
une base de données (19) permettant de stocker une pluralité d'éléments d'informations utilisateur et d'éléments d'informations de mise à jour de temps associés l'un à l'autre, chacun des éléments d'informations utilisateur indiquant le numéro de téléphone ou l'adresse de messagerie d'un correspondant, chacun des éléments d'informations de mise à jour de temps indiquant une date et une heure de mise à jour auxquelles les éléments d'informations utilisateur correspondants ont été mis à jour,
**caractérisé par**
une section de réception permettant de recevoir une consultation provenant du terminal de communication (10), ladite consultation comprenant un élément d'informations de contact et l'élément d'informations de temps,
une section d'émission permettant d'émettre une réponse vers le terminal de communication (10), ladite réponse indiquant si le numéro de téléphone ou l'adresse de messagerie, indiqués par l'élément d'informations de contact, a été modifié ou non, en fonction de ce qu'une date et une heure d'utilisation, indiquées par l'élément d'informations de temps reçu sont plus vieilles qu'une date et une heure de mise à jour indiquées par un élément d'informations de mise à jour de temps stocké qui correspond ou non à l'élément d'informations de contact reçu.

3. Système de communication comprenant un terminal de communication conforme à la revendication 1 et un serveur de gestion conforme à la revendication 2.

4. Procédé de communication destiné à un terminal de communication (10), ledit procédé comprenant les étapes suivantes :
la mémorisation d'une pluralité d'éléments d'informations de contacts, chaque élément d'informations de contact indiquant le numéro de téléphone ou l'adresse de messagerie d'un correspondant,
la mémorisation, pour chaque élément d'informations de contact, d'un élément d'informations de temps indiquant la date et l'heure les plus récemment utilisées auxquelles l'élément d'informations de contact a été mis à jour ou utilisé, et
**caractérisé par**
l'envoi à un serveur (13) d'un élément d'informations de contact appartenant à la pluralité d'éléments d'informations de contacts stockés en même temps qu'un élément d'informations de temps correspondant, et
la réception d'une réponse provenant du serveur (13), ladite réponse indiquant si le numéro de téléphone ou l'adresse de messagerie, indiqués par l'élément d'informations de contact, a été modifié ou non.

5. Procédé de mise en oeuvre d'un serveur de gestion dans le but de mener une communication avec un terminal de communication (10) conforme à la revendication 1, ledit procédé comprenant les étapes suivantes :
la mémorisation d'une pluralité d'éléments d'informations clients et d'éléments d'informations de mise à jour de temps associés l'un à l'autre, chacun des éléments d'informations utilisateur indiquant le numéro de téléphone ou l'adresse de messagerie d'un correspondant, chacun des éléments d'informations de mise à jour de temps indiquant la date et l'heure d'une mise à jour à laquelle les éléments d'informations l'utilisateur correspondant ont été mis à jour ;
**caractérisé par**
la réception d'une consultation provenant du terminal de communication (10), ladite consultation comprenant un élément d'informations de contact et un élément d'informations de temps,
l'émission d'une réponse vers le terminal de communication (10), ladite réponse indiquant si le numéro de téléphone ou l'adresse de messagerie, indiqués par l'élément d'informations de contact, a été modifié ou non en fonction de ce qu'une date et une heure d'utilisation, indiquées par l'élément d'informations de temps reçu, sont antérieures à une date et une heure de mise à jour indiquées par un élément d'informations de mise à jour de temps mémorisé, lequel correspond ou non à l'élément d'informations de contact reçu.
